# EUROPÄISCHE PATENTSCHRIFT

(11) **EP 0 897 120 B1**
(45) Veröffentlichungstag und Bekanntmachung des Hinweises auf die Patenterteilung: **01.10.2003**
(21) Anmeldenummer: 98114497.5
(22) Anmeldetag: 01.08.1998
(51) Int. Cl.: G01S 7/481, G01S 17/02, G02B 7/02, G02B 26/10

(54) **Vorrichtung zum Orten von in einen zu überwachenden Raumbereich eindringenden Objekten.**
Apparatus for localisation of objects penetrating a monitored space
Dispositif pour localiser l'entrée d'objets dans un domaine spatial surveillé

(30) Priorität: 13.08.1997 DE 19735038
(43) Veröffentlichungstag der Anmeldung: 17.02.1999
(73) Patentinhaber: Schmersal-EOT GmbH & Co. KG, 79108 Freiburg (DE)
(72) Erfinder: Jakob, Hermann, 79297 Winden (DE); Burth, Bernhard, 79312 Emmendingen (DE); Meinert, Thomas, 79312 Emmendingen (DE)
(74) Vertreter: Sparing - Röhl - Henseler Patentanwälte

(56) Entgegenhaltungen:
- DE-A- 3 930 272
- DE-A- 4 315 077
- DE-A- 4 340 756
- US-A- 5 164 584

## Beschreibung

Die Erfindung betrifft eine Vorrichtung zum Orten von in einen zu überwachenden Raumbereich eindringenden Objekten nach dem Anspruch 1.

Eine derartige Vorrichtung zum Orten von in einen zu überwachenden Raumbereich eindringenden Objekten ist aus DE-A-4 315 077 bekannt, bei der eine um eine Achse drehbare, optische Umlenkeinrichtung aus zwei zueinander senkrecht angeordneten Spiegeln vorgesehen ist, wobei ein in einem Winkel von 45° zur Drehachse angeordneter Spiegel ein Strahlenbündel in einen zu überwachenden Bereich aussendet, während der andere, senkrecht zum vorstehend erwähnten angeordnete Spiegel ein aus dem zu überwachenden Bereich reflektiertes Strahlenbündel über einen Hohlspiegel auf einen in dessen Brennpunkt angeordneten Empfänger wirft. Da gewöhnlich durch eine derartige Vorrichtung Objekte mit beliebiger Oberflächenstruktur und -farbe in unterschiedlichen Abständen zu erkennen sind, ist der vom Empfänger erfaßte Strahlungsfluß nicht über den gesamten Erfassungsbereich hinweg konstant, so daß dementsprechend die Empfindlichkeit zwischen minimalem und maximalem Tastabstand unterschiedlich ist. Eine Erhöhung der Empfindlichkeit führt aber dazu, daß auch Kleinstpartikel wie Stäube, Nebel, Kleintiere od.dgl. unerwünschterweise erkannt werden.

Eine weitere Vorrichtung ist aus DE-A-4 340 756 bekannt, bei der ein Empfangskollimator verwendet wird, der das eintretende Strahlenbündel auf einen Empfänger fokussiert, wobei zwei konzentrische Fokussierungszonen mit unterschiedlichen Brennweiten vorgesehen sind, eine innere mit kurzer Brennweite und eine äußere mit großer Brennweite, wobei erstere vorgesehen ist, um auch sehr nahe sich vorbeibewegende Objekte erkennen zu können. Dies führt aber nicht zu einem etwa konstanten Signal über den Abtastbereich.

Aufgabe der Erfindung ist es, eine Vorrichtung nach dem Oberbegriff des Anspruchs 1 zu schaffen, bei der zwischen minimalem und maximalen Tastabstand ein möglichst konstantes Signal seitens des Empfängers erzeugt wird.

Diese Aufgabe wird entsprechend dem Anspruch 1 gelöst.

Hierbei wird der Kernbereich eines einfallende Strahlung auf einen Empfänger bündelnden Empfangskollimators abgeschattet, wobei der nicht abgeschattete Bereich in drei konzentrische Fokussierungszonen mit unterschiedlichen Brennweiten unterteilt ist, wobei die äußere Fokussierungszone die größte Brennweite, die innere Fokussierungszone eine mittlere Brennweite und die mittlere Fokussierungszone die kürzeste Brennweite aufweist.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt schematisiert eine Ausführungsform einer Vorrichtung zum Orten von in einen zu überwachenden Raumbereich eindringenden Objekten.
Fig. 2 zeigt den Strahlenverlauf am Empfangskollimator der Vorrichtung von Fig. 1.
Fig. 3 zeigt schematisiert eine Umlenkeinrichtung der Vorrichtung von Fig. 1 in verschiedenen Ansichten auseinandergezogen.

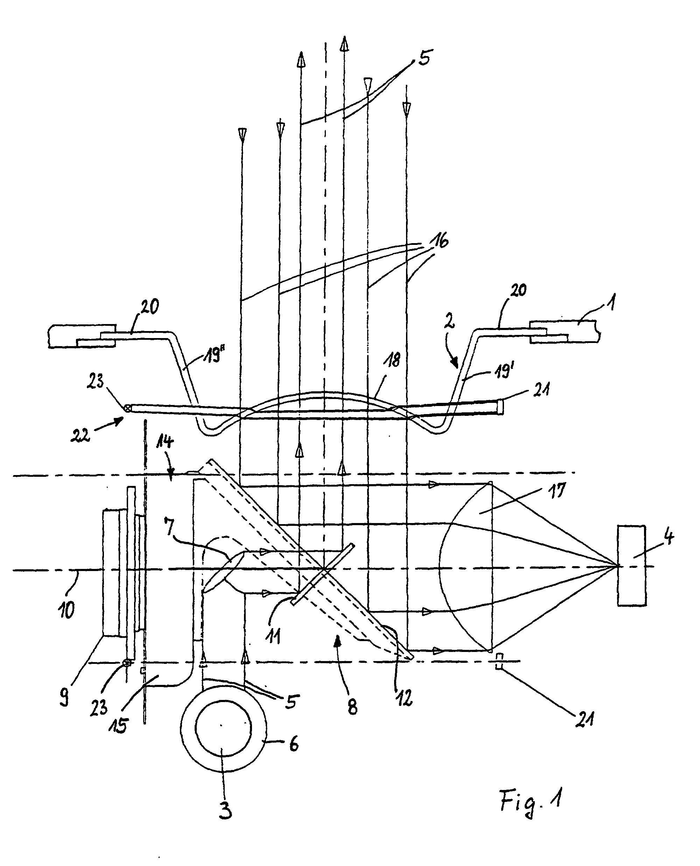

Die in Fig. 1 dargestellte Vorrichtung umfaßt ein Gehäuse 1, das zu einem zu überwachenden Raumbereich hin mit einem Fenster 2 versehen ist. Innerhalb des Gehäuses 1 befindet sich ein Sender 3 und ein Empfänger 4 für optische Strahlung, insbesondere (gepulste) Laserstrahlung. Ein vom Sender 3 ausgesendetes Strahlenbündel 5 wird über eine Kollimatoroptik 6 und zwei planen, um 45° geneigten Justage- und Umlenkspiegel 7 auf eine optische Umlenkeinrichtung 8 geworfen. Die Umlenkeinrichtung 8 ist über einen Motor 9 um eine Drehachse 10 drehbar.

Die Umlenkeinrichtung 8 umfaßt einen Sendeumlenkspiegel 11 und einen in bezug hierzu feststehend und senkrecht montierten Empfangsumlenkspiegel 12. Die planen Sende- und Empfangsumlenkspiegel 11, 12 sind beide in einem Winkel von 45° zur Drehachse 10 geneigt angeordnet, wobei der Empfangsumlenkspiegel 12 eine mittige Ausnehmung 13 aufweist, in der der Sendeumlenkspiegel 11 angeordnet ist.

Sende- und Empfangsumlenkspiegel 11, 12 sind auf einem Träger 14 befestigt, dessen Fuß 15 mit einem Motor 9 gekoppelt ist, um die Umlenkeinrichtung 8 um die Drehachse 10 zu drehen.

Vom Sendeumlenkspiegel 11 wird das Strahlenbündel 5 durch das Fenster 2 in einen zu überwachenden Raumbereich reflektiert und überstreicht infolge der kontinuierlichen Drehung der Umlenkeinrichtung 8 den zu überwachenden Raumbereich.

Ein von einem Objekt im zu überwachenden Raumbereich reflektiertes Strahlenbündel 16 tritt durch das Fenster 2 in das Gehäuse 1 ein und fällt auf den Empfangsumlenkspiegel 12, von dem es auf einen Empfangskollimator 17 fällt, der das Strahlenbündel 16 auf den Empfänger 4 bündelt, der die An- oder Abwesenheit eines Objektes im zu überwachenden Raumbereich feststellt. Hierbei dient der Sendeumlenkspiegel 11 als zentrale Aperturblende für den Empfangskollimator 17, dessen Kern hierdurch abgeschattet wird.

Das Fenster 2 ist langgestreckt, von gleichbleibender Höhe und Stärke und führt beispielsweise zu einem Abtastbereich, der sich über etwa 180° senkrecht zur Drehachse 10 erstreckt. Der Abtastbereich des ausgesendeten Strahlenbündels 5 wird durch einen Mittelabschnitt 18 des Fensters 2 in Form eines Kugelausschnitts begrenzt, dessen Mittelpunkt der Schnittpunkt der Drehachse 10 mit den optischen Achsen des ein- und ausfallenden Strahlenbündels 5, 16 ist.

Hierdurch wird das vom Sendeumlenkspiegel 11 reflektierte Strahlenbündel 5 teilweise an den beiden sphärischen und äquidistanten Grenzflächen des kugelausschnittförmigen Mittelabschnitts 18 des Fensters 2 reflektiert und im Brennpunkt F dieser Kugelflächen fokussiert, so daß diese am Fenster 2 reflektierte Strahlung in sich selbst zurückreflektiert wird und somit keine Störungen verursacht.

Außerdem besteht ein weiterer Vorteil der äquidistanten Grenzflächen des kugelausschnittförmigen Mittelabschnitts 18 des Fensters 2 darin, daß ihre optische Wirkung bezüglich des gesendeten Strahlenbündels 5 in jeder Schnittebene durch den Kugelmittelpunkt exakt gleich ist, so daß keine astigmatische Wirkung eintritt.

An eventuell verschmutzten Stellen des Sendeumlenkspiegels 11 oder an dessen Kanten gestreute oder gebeugte Strahlung wird ebenfalls im Maßstab 1:1 durch die äquidistanten Grenzflächen des kugelausschnittförmigen Mittelabschnitts 18 des Fensters 2 in sich selbst abgebildet, so daß auch diese Sendestrahlungsanteile durch Reflexion am Fenster 2 nicht zum Empfänger 4 gelangen können.

Der Empfangskollimator 17 umfaßt drei konzentrische Fokussierungszonen A, B und C, die sich um den abgeschatteten Kern des Empfangskollimators 17 herum erstrecken.

Die äußere Fokussierungszone A besitzt eine große Brennweite und dient zum Fokussieren von Strahlung auf dem Empfänger 4, die aus dem Bereich von unendlich bis zu einem bestimmten Tastabstand x stammt. Das Empfangssignal über dem Tastabstand z wird durch die jeweils wirksame Empfängeröffnung bestimmt. Liegt der Empfänger 4 im Brennpunkt des Empfangskollimators 17, so ist die wirksame Empfängeröffnung D_{E} bestimmt durch die maximale Öffnung Dmax des Empfangskollimators 17 und die wirksame Fläche des Empfängers 4 bzw. dessen Durchmessers d_{E}. Solange d_{E}*z/f_{A} < Dmax ist, gilt D_{E}(z)=d_{E}*z/f_{A}, wobei f_{A} die Brennweite der Fokussierungszone A des Empfangskollimators 17 ist. Dies bestimmt die Auslegung der Fokussierungszone A. Der vorbestimmte Tastabstand x entspricht hierbei praktisch einem unteren Wert für den Tastabstand z, bei dem der wirksame Aperturwinkel für die Fokussierzone A noch weitgehend konstant bzw. nicht zu stark abgefallen ist. Geht man beispielsweise von d_{E}=0,5 mm, Dmax=44 mm und einem weitgehend konstanten Aperturwinkel im Bereich von z = 2000 mm bis 4000 mm aus, ergibt sich eine Brennweite von 42 mm, wobei eine Kernabschattung mit Dmin = 23 mm bewirkt, daß die Fokussierungszone A für z<800 mm nahezu unwirksam ist.

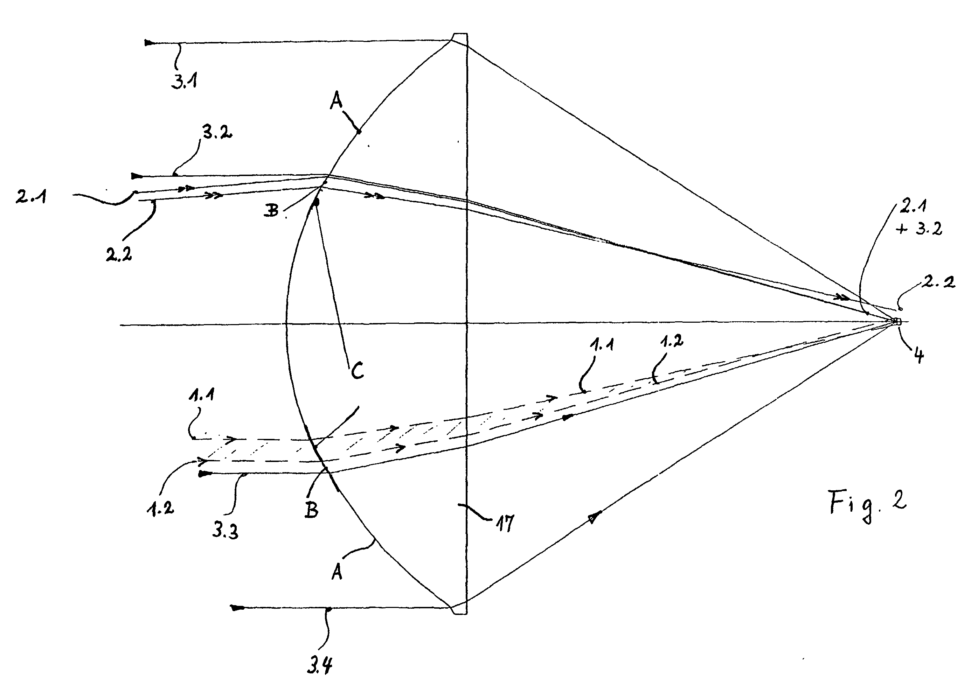

Fig. 2 zeigt das durch die äußere, ringförmige Fokussierungszone A des Empfangskollimators 17 auf die wirksame Fläche des Empfängers 4 fokussierte, durch die Strahlen 3.1, 3.2, 3.3. und 3.4 gebildete Strahlenbündel.

Die sich an die Fokussierungszone A anschließende, schmale Fokussierungszone B ist diejenige mit größter Brechkraft und damit kleinster Brennweite f_{B}, um einen großen Erfassungsbereich im Nahfeld zu erhalten, d.h. im wesentlich vom Fenster 2 bis zu einem vorbestimmten Tastabstand y. Hierzu ist es wichtig, daß die Fokussierungszone B möglichst achsnah zur optischen Achse des Empfangskollimators 17 angeordnet ist. Allerdings würde ein sehr nahe am Fenster 2 befindliches Objekt nicht erkannt werden, wenn die Fokussierungszone B zu nahe an der optischen Achse liegen würde. Am Fenster 2 reflektierte Strahlung wird durch die Kernabschattung mittels des Sendeumlenkspiegels 11 und zusätzlich durch die Formgebung des Fensters 2 mit seinem kugelausschnittförmigen Mittelteil 18 daran gehindert, vom Empfänger 4 erfaßt zu werden und dadurch Störungen hervorzurufen.

Geht man von den obigen zahlenmäßigen Voraussetzungen aus, liegt die Brennweite f_{B} zwischen 0,8 und 0,85 der Brennweite f_{A}, während die Fokussierungszone B zwischendem 0,48- bis 0,52-fachen von Dmax liegt. Hierdurch wird ein Tastabstandsbereich von etwa 80 bis 250 mm erfaßt.

Wie aus Fig. 2 ersichtlich, fällt nur ein Teil des von den Strahlen 2.1 und 2.2 gebildeten Strahlenbündels (nur in der oberen Hälfte von Fig. 2 dargestellt) direkt auf die wirksame Fläche des Empfängers 4, so daß nicht kleine oder kleinste Objekte im Nahbereich die Wirksamkeit der Vorrichtung beeinträchtigen.

Mit zunehmendem Tastabstand z wird die vom Empfänger 4 über die von Zone B gesehene Strahlungsfläche des Senders 3 rasch größer, so daß für einen Tastabstandsbereich etwa von z = 180 bis 200 mm die Fokussierungszone B maximale Empfindlichkeit aufweist, d.h. ihre volle Öffnung wirksam ist. Für weiter zunehmende Tastabstände z nimmt die wirksame Öffnung von Fokussierungszone B wegen der dann zu großen Brechkraft (bzw. zu kleinen Einfallswinkeln) bis zu einem Grenztastabstand wieder ab.

Für mittlere Tastabstände von y<z<x ergibt sich unter den oben genannten zahlenmäßigen Voraussetzungen wie mittleren Tastabständen etwa von 250 bis 900 mm eine Brennweite f_{C} für die innerste Fokussierungszone C, vgl. Strahlen 1.1 und 1.2, entsprechend 0,94 bis 0,98*f_{A} und eine Öffnung zwischen dem 0,4- bis 0,48-fachen der Gesamtöffnung des Empfangskollimators 17.

Die Fokussierungszonen A, B, C bilden zur optischen Achse rotationsymmetrische Flächen, die stetig ineinander übergehen, um Beugungseffekte an Kanten zu vermeiden und eine Herstellung mit einem einfachen Werkzeug zu ermöglichen.

Vorteilhafterweise schließt sich an den Mittelabschnitt 18 des Fensters 2 ein umlaufender, sich in Richtung der Konvexität des Fensters 2, d.h. auswärts erstreckender Randbereich 19', 19" an, der in einen Umfangsflansch 20 übergeht. Hierdurch läßt sich eine wirksame Verschmutzungsmessung des Fensters 2 vornehmen, indem entlang eines sich über etwa 180° erstreckenden Randbereichs 19' des Fensters 2 im Halbkreis um die Drehachse 10 im Gehäuse 1 eine ringförmige Anordnung von Empfängern 21 vorgesehen ist, die optische Strahlung, insbesondere IR-Strahlung, von einer im Gehäuse 1 entlang des gegenüberliegenden Randbereichs 19" ebenfalls im Halbkreis um die Drehachse 10 angeordneten Referenzsenderanordnung 22, die im dargestellten Fall aus einer Reihe von Referenzsendern 23 besteht, empfängt, die den Mittelabschnitt 18 zweimal sowie die gegenüberliegenden Randbereiche 19', 19" des Fensters 2 passiert hat.

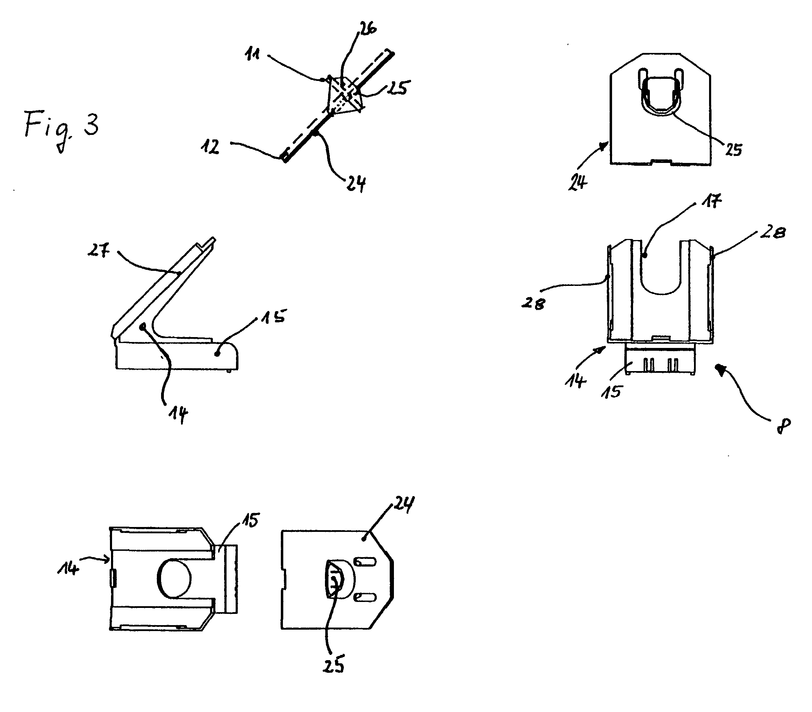

Gemäß Fig. 3 ist für die Umlenkeinrichtung 8 ein Spiegelträger 24 vorgesehen, der eine Durchtrittsöffnung 25 aufweist, benachbart zu der eine sich senkrecht zur Fläche des Spiegelträgers 24 erstreckende Aufnahme 26 für den Sendeumlenkspiegel 11 vorgesehen ist. Der Empfangsumlenkspiegel 12 wird auf die Fläche des Spiegelträgers 24 geklebt, so daß Sende- und Empfangsumlenkspiegel 11, 12 genau senkrecht zueinander angeordnet sind und ein Element hoher Steifigkeit und Temperaturstabilität gebildet wird. Der Spiegelträger 24 mit den darauf angeordneten Sende- und Empfangsumlenkspiegeln 11, 12 wird von dem Träger 14 aufgenommen, dessen in einem Winkel von 45° zu seinem Fuß 15 verlaufender Abschnitt 27 mit einer langen Seitenführung 28 zur Lagedefinition versehen ist, die das Einschieben und Halten des Spiegelträgers 24 ermöglicht, wobei durch gabelförmiges Ausbilden des freien Endes des Abschnitts 17 das Einschieben mit dem Sendeumlenkspiegel 11 nicht behindert wird. Der Träger 14 und der Spiegelträger 24 sind zwei Kunststoffspritzteile.

Der Träger 14, der gegebenenfalls mit Ausgleichsgewichten bestückt wird, um ein taumelfreies Rotieren hiervon zu ermöglichen, ist auf dem als Spindelmotor ausgeführten Motor 9 montiert, der eine feststehende Welle aufweist, um die der Träger 14 rotiert.

Zwischen Motor 9 und Träger 14 kann eine Codescheibe 29 angeordnet sein, die zur Feststellung der Winkelposition der Umlenkeinrichtung 8 dient.

## Patentansprüche

1. Vorrichtung zum Orten von in einen zu überwachenden Raumbereich eindringenden Objekten, mit einem Sender (3) und einem Empfänger (4) für optische Strahlung sowie eine drehbare optische Umlenkeinrichtung (8) mit einem um eine Drehachse (10) drehbaren und gegenüber dieser geneigten Sendeumlenkspiegel (11) für ein in einen zu überstreichenden Raumbereich ausfallendes Strahlenbündel (5) und mit einem Empfangsumlenkspiegel (12) zum Lenken eines aus dem Raumbereich reflektierten, einfallenden Strahlenbündels (16) zum Empfänger (4), **dadurch gekennzeichnet, daß** vor dem Empfänger (4) ein Empfangskollimator (17) angeordnet ist, vor dem sich eine zentrale Aperturblende befindet und der drei konzentrische Fokussierungszonen (A, B, C) aufweist, wobei die äußere Fokussierungszone (A) eine große Brennweite für Strahlung von weit entfernten Objekten bis zu einem vorbestimmten Tastabstand x, die sich daran anschließende Fokussierungszone (B) eine geringe Brennweite für Strahlung aus dem Nahbereich bis zum einem vorbestimmten Tastabstand y und die innere Fokussierungszone (C) benachbart zu dem durch die Aperturblende ausgeblendeten Bereich eine mittlere Brennweite für den Bereich zwischen den Abständen x und y aufweist.

2. Vorrichtung nach Anspruch 1, **dadurch gekennzeichnet, daß** die Fokussierungszonen (A, B, C) stetig ineinander übergehen.

3. Vorrichtung nach Anspruch 1 oder 2, **dadurch gekennzeichnet, daß** die zentrale Aperturblende der Sendeumlenkspiegel (11) ist, wobei der Sende- und der dazu senkrechte Empfangsumlenkspiegel (11, 12) in einem Winkel von 45° zur Drehachse (10) angeordnet sind.

4. Vorrichtung nach Anspruch 2 oder 3, **dadurch gekennzeichnet, daß** ein Fenster (2) in Form eines Kugelausschnitts (18) ausgebildet vorgesehen ist, dessen Mittelpunkt der Schnittpunkt der Drehachse (10) mit den optischen Achsen des ein- und ausfallenden Strahlenbündels (5, 16) ist.

5. Vorrichtung nach Anspruch 4, **dadurch gekennzeichnet, daß** das Fenster (2) einen sich in Richtung der Konvexität des Fensters (2) erstreckenden, um die Drehachse (10) umlaufenden Randbereich (19') aufweist, wobei entlang des Randbereichs (19') eine Vielzahl von Empfängern (21) vorgesehen ist, die optische Strahlung von einer im Gehäuse (1) angeordneten Referenzsenderanordnung (22) empfängt.

6. Vorrichtung nach Anspruch 5, **dadurch gekennzeichnet, daß** spiegelbildlich zu dem Randbereich (19'), entlang dem die Vielzahl von Empfängern (21) angeordnet ist, ein weiterer Randbereich (19") vorgesehen ist, den die optische Strahlung der Referenzsenderanordnung passiert.

7. Vorrichtung nach einem der Ansprüche 1 bis 6, **dadurch gekennzeichnet, daß** die drehbare optische Umlenkeinrichtung (8) einen auf einem Motor (9) angeordneten Träger (14) umfaßt, der in einer langen Seitenführung (28) einen den Empfangsumlenkspiegel (12) in einem EWinkel von 45° zur Drehachse (10) tragenden Spiegelträger (24) aufnimmt, der seinerseits mit einer Aufnahme (26) für den in einem Winkel von 90° zum Empfangsumlenkspiegel (12) und in einem Winkel von 45° zur Drehachse (10) angeordneten Sendeumlenkspiegel (11) versehen ist.

8. Vorrichtung nach Anspruch 7, **dadurch gekennzeichnet, daß** der Motor (9) ein feststehende Welle aufweist.

## Claims

1. Apparatus for localisation of objects penetrating a monitored space, with a transmitter (3) and a receiver (4) for optical radiation, and a rotatable optical deflecting device (8) with a transmission deflecting mirror (11) rotatable around an axis of rotation (10) and tilted in relation to it, for a bundle of rays *(5)* outgoing into a space to be scanned, and with a reception deflecting mirror (12) for deflecting a bundle of rays (16) reflected from the space, incoming to the receiver (4), **characterised in that** a receiving collimator (17) is arranged in front of the receiver (4), with a central aperture diaphragm in front of it and having three concentric focussing zones (A, B, C), whereby the outer focussing zone (A) has a large focal length for radiation from distant objects up to a specified scanning distance x, the adjacent focussing zone (B) has a shorter focal length for radiation from dose range up to a specified scanning distance y and the inner focussing zone (C) adjacent to the range gated out by the aperture diaphragm has a medium focal length for the range between the distances x and y.

2. Apparatus according to Claim 1, **characterised in that** die transition between the focussing zones (A, B, C) is gradual.

3. Apparatus according to Claim 1 or 2, **characterised in that** the central aperture diaphragm is the transmission deflecting mirror (11) whereby the transmission deflecting mirror and the reception deflecting mirror which is at right angles to it (11, 12) are arranged at an angle of 45° to the axis of rotation (10).

4. Apparatus according to Claim 2 or 3, **characterised in that** a window (2) is in the shape of a spherical cut-out (18) the centre point of which is the intersection of the axis of rotation (10) with the optical axes of the incoming and outgoing bundle of rays (5, 16).

5. Apparatus according to Claim 4, **characterised in that** the window (2) has an edge area (19') extending in the direction of the convexity of the window (2) around the axis of rotation (10), there being numerous receivers (21) along the edge area (19'), receiving optical radiation from a reference transmitter arrangement (22) arranged in a casing (1).

6. Apparatus according to Claim 5, **characterised in that** there is a further edge area (19") arranged in an opposite layout mirrored to the edge area (19') with numerous receivers (21) arranged along it, which the optical radiation of the reference transmitter arrangement passes.

7. Apparatus according to one of the Claims 1 to 6, **characterised in that** the rotatable optical deflecting device (8) comprises a carrier (14) arranged on a motor (9), holding in a long side guide (28) a mirror carrier (24) carrying the reception deflecting mirror (12) at an angle of 45° to the angle of rotation (10), the mirror carrier for its part being provided with a holder (26) for the transmission deflecting mirror (11) arranged at an angle of 900 to the reception deflecting mirror (12) and at an angle of 45° to the axis of rotation (10).

8. Apparatus according to Claim 7, **characterised in that** the motor (9) has a fixed shaft.

## Revendications

1. Dispositif pour détecter des objets pénétrant dans une zone à surveiller, avec un émetteur (3) et un récepteur (4) pour rayonnement optique ainsi qu'un dispositif de déviation optique rotatif (8) avec un miroir de déviation d'émission (11) pouvant tourner autour d'un axe de rotation (10) et incliné par rapport à celui-ci pour un faisceau lumineux (5) émergeant dans une zone à balayer et un miroir de déviation de réception (12) pour diriger un faisceau lumineux (16) incident réfléchi par la zone vers le récepteur (4), **caractérisé en ce que** devant le récepteur (4) est disposé un collimateur de réception (17) devant lequel se trouve un diaphragme d'ouverture central et qui présente trois zones de focalisation concentriques (A, B, C), la zone de focalisation extérieure (A) présentant une grande distance focale pour le rayonnement d'objets éloignés jusqu'à une distance de palpage x prédéterminée, la zone de focalisation (B) suivante présentant une distance focale réduite pour le rayonnement venant de la zone proche jusqu'à une distance de palpage y prédéterminée et la zone de focalisation intérieure (C) voisine de la zone diaphragmée par le diaphragme d'ouverture présentant une distance focale moyenne pour la zone située entre les distances x et y.

2. Dispositif selon la revendication 1, **caractérisé en ce que** les zones de focalisation (A, B, C) passent constammment l'une dans l'autre.

3. Dispositif selon la revendication 1 ou 2, **caractérisé en ce que** l'ouverture de diaphragme centrale est le miroir de déviation d'émission (11), le miroir de déviation d'émission et le miroir de déviation de réception (11, 12) qui lui est perpendiculaire étant disposés avec un angle de 45° par rapport à l'axe de rotation (10).

4. Dispositif selon la revendication 2 ou 3, **caractérisé en ce qu'**il est prévu une fenêtre (2) en forme de secteur sphérique (18) dont le centre est le point d'intersection de l'axe de rotation (10) et des axes optiques du faisceau lumineux émergeant et incident (5, 16).

5. Dispositif selon la revendication 4, **caractérisé en ce que** la fenêtre (2) présente une zone de bordure (19') s'étendant dans le sens de la convexité de la fenêtre (2), tournant autour de l'axe de rotation (10), un grand nombre de récepteurs (21) prévus le long de la zone de bordure (19') recevant le rayonnement optique depuis une installation d'émission de référence (22) disposée dans le boîtier (1).

6. Dispositif selon la revendication 5, **caractérisé en ce que**, de manière symétrique par rapport à la zone de bordure (19') le long de laquelle est disposé le grand nombre de récepteurs (21), une autre zone de bordure (19'') est prévue, qui est traversée par le rayonnement optique de l'installation d'émission de référence.

7. Dispositif selon l'une quelconque des revendications 1 à 6, **caractérisé en ce que** le dispositif de déviation optique rotatif (8) comprend un support (14) disposé sur un moteur (9) et recevant, dans un moyen de guidage latéral allongé (28), un support de miroir (24) qui porte le miroir de déviation de réception (12) avec un angle de 45° par rapport à l'axe de rotation (10) et qui est muni à son tour d'un logement (26) pour le miroir de déviation d'émission (11) disposé en formant un angle de 90° par rapport au miroir de déviation de réception (12) et un angle de 45° par rapport à l'axe de rotation (10).

8. Dispositif selon la revendication 7, **caractérisé en ce que** le moteur (9) présente un arbre fixe.
